(19) Europäisches Patentamt

European Patent Office

Office européen des brevets

(11) **EP 3 521 586 B1**

(12) **EUROPÄISCHE PATENTSCHRIFT**

(45) Veröffentlichungstag und Bekanntmachung des Hinweises auf die Patenterteilung:
**13.10.2021 Patentblatt 2021/41**

(51) Int Cl.:
*F02B 23/06* (2006.01)    *F02B 23/10* (2006.01)
*F02M 21/02* (2006.01)    *F02D 13/02* (2006.01)
*F02D 41/00* (2006.01)

(21) Anmeldenummer: **19152721.7**

(22) Anmeldetag: **21.01.2019**

(54) **VERFAHREN ZUM BETREIBEN EINES OTTO-GASMOTORS**

METHOD FOR OPERATING AN OTTO GAS MOTOR

PROCÉDÉ DE FONCTIONNEMENT D'UN MOTEUR À GAZ OTTO

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.02.2018 DE 102018102248**

(43) Veröffentlichungstag der Anmeldung:
**07.08.2019 Patentblatt 2019/32**

(73) Patentinhaber: **MAN Truck & Bus SE 80995 München (DE)**

(72) Erfinder:
• **Barciela Díaz-Blanco, Bruno 90489 Nürnberg (DE)**

• **Boegershausen, Mathias 91056 Erlangen (DE)**

(74) Vertreter: **v. Bezold & Partner Patentanwälte - PartG mbB Akademiestraße 7 80799 München (DE)**

(56) Entgegenhaltungen:
**EP-A1- 2 698 508     DE-A1-102006 029 754 DE-A1-102011 110 072     DE-A1-102012 103 193 JP-A- H1 193 776     JP-A- 2003 278 569**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zum Betreiben eines, insbesondere stationären, Otto-Gasmotors nach Patentanspruch 1 sowie einen Otto-Gasmotor, insbesondere einen stationären Otto-Gasmotor, nach Patentanspruch 7.

Es ist bekannt, stationäre Otto-Gasmotoren mit einer stöchiometrischen Verbrennung und einem Drei-Wege-Katalysator zur Abgasnachbehandlung (optional auch mit Abgasrückführung) zu betreiben. Dieses Konzept zum Betreiben des Otto-Gasmotors hat den Vorteil, dass die Grenzwerte für die Schadstoffemissionen des Motors mit einer ausgereiften Technologie (Drei-Wege-Katalysator) eingehalten werden können. Dabei ist es jedoch nachteilig, dass bei einer derartigen Motor-Betriebsweise Bauteile des Motors einer relativ hohen thermischen Belastung ausgesetzt werden, wodurch die erreichbaren Mitteldrücke und Wirkungsgrade stark limitiert werden. Zudem sind hier die gesamten Systemkosten aufgrund der Werkstoffauswahl an der Abgasanlage und anderen "heißen" Bauteilen sowie auch aufgrund der Edelmetallbeladung der Katalysatoren relativ hoch und die Lebensdauer eines derartigen Systems begrenzt. Dabei gibt es hier insbesondere aufgrund des Drei-Wege-Katalysators hohe Wartungskosten für den Gasmotor.

Weiter ist es auch bekannt, stationäre Otto-Gasmotoren mit einem homogenen Magerbrennverfahren zu betreiben, wobei hier dann regelmäßig auch auf eine Abgasnachbehandlung verzichtet werden kann. Das homogene Magerbrennverfahren hat dabei den Vorteil, dass die thermische Belastung für den Gasmotor verringert und die aktuellen Grenzwerte für Schadstoffemissionen (TA-Luft) ohne Abgasnachbehandlung erfüllt werden können. Allerdings entsteht bei derartigen Motoren ohne Abgasnachbehandlung ein Kompromiss zwischen mehreren Motorparametern, welche zu einer Begrenzung des Wirkungsgrads des Motors führt. Ein Abgasnachbehandlungssystem, üblicherweise zumindest ein SCR-Katalysator, würde hier einen besseren Hochdruckprozess ermöglichen, jedoch würde sich der Ladungswechselprozess des Motors im Vergleich zu einem Betrieb ohne Abgasnachbehandlungssystem verschlechtern. Zudem würde ein derartiges Abgasnachbehandlungssystem mit wenigstens einem SCR-Katalysator sowohl bei der Anschaffung (von Katalysator, Injektor, Tank und Dosierregler inklusive Sensoren) als auch bei dem Verbrauch an ammoniakhaltigem/-erzeugendem Reduktionsmittel, beispielsweise "Adblue", zu deutlich erhöhten Kosten des gesamten Aggregats führen.

Des Weiteren basieren stationäre Otto-Gasmotoren regelmäßig auch auf Dieselmotoren bzw. auf Bauteilen von Dieselmotoren. Dies limitiert jedoch ebenfalls das Potential eines hohen Wirkungsgrads des Otto-Gasmotors.

Die JP 2003 278569 A offenbart einen fremdgezündeten Gasmotor mit Vorkammer, der im Miller-Kreisprozess betrieben wird.

Die JP H11 93776 A offenbart einen fremdgezündeten Gasmotor mit Direkteinblasung und einem Kolben, der spiralförmige Quetschflächen zum Erzeugen von Quetschströmungen aufweist.

Die DE 10 2006 029754 A1 offenbart einen fremdgezündeten Gasmotor mit Direkteinblasung und einem Kolben, der Quetschflächen zum Erzeugen von Quetschströmungen aufweist. Die EP 2 698 508 A1 offenbart einen Zylinderkopf eines stationären, fremdgezündeten Gasmotors, der mindestens zwei Auslasskanäle, mindestens zwei Einlasskanäle, mindestens eine Zylinderachse und eine Unterseite aufweist. Jeder Einlasskanal verläuft zur Unterseite des Zylinderkopfs und kann einen Ventilsitz für ein Einlassventil aufweisen. Jeder Ventilsitz kann eine entsprechende Mittelachse haben. Mindestens ein Einlasskanal hat eine Senkung im Randbereich der Unterseite. Die Senkung kann eine zur entsprechenden Mittelachse versetzte Achse aufweisen. Im Zusammenhang mit einem Betrieb nach Miller wirken die Ventilöffnungszeiten, die Senkungen der Einlasskanäle sowie eine Topfmulde zusammen, um einen starken Drall zu erzeugen.

Die DE 10 2011 110072 A1 bezieht sich auf einen Zylinderkopf eines stationären Gas-Ottomotors mit mindestens zwei Einlasskanälen, die an einem Zylinderkopfboden münden, und mit je einem im Einlasskanal vorgesehenen Ventilsitz für ein Einlassventil, wobei der Ventilsitz eine Mittelachse aufweist und wobei mindestens ein Einlasskanal im Bereich des Zylinderkopfbodens eine Fase mit einer Symmetrieachse aufweist, die eine Tumbleströmung des eintretenden Gases bewirkt.

Aufgabe der Erfindung ist es, ein Verfahren zum Betreiben eines, insbesondere stationären, Otto-Gasmotors sowie einen Otto-Gasmotor, insbesondere einen stationären Otto-Gasmotor, bereitzustellen, bei denen der Otto-Gasmotor mit einem besonders hohen Wirkungsgrad und gleichzeitig geringen Schadstoffemissionen betrieben werden kann.

Diese Aufgabe wird durch die Merkmale der unabhängigen Ansprüche gelöst. Bevorzugte Weiterbildungen sind in den Unteransprüchen offenbart.

Gemäß Patentanspruch 1 wird ein Verfahren zum Betreiben eines, insbesondere stationären, Otto-Gasmotors vorgeschlagen, wobei der wenigstens eine Kolben des als Hubkolben-Brennkraftmaschine ausgebildeten Gasmotors durch einen Quetschkolben gebildet ist, insbesondere dergestalt, dass eine Quetschspalthöhe bei OT (oberer Totpunkt) geringer ist als 4mm, wobei der Gasmotor während des Ansaugtaktes mit einer Zylinderladung betrieben wird, die eine reduzierte Drallzahl

$$\left(\frac{n_D}{n}\right)_{m,red}$$

nach "Thien" geringer als 2,0 aufweist, und wobei der Gasmotor nach einem Miller-Kreisprozess betrieben wird, insbesondere dergestalt, dass der Schließzeitpunkt des wenigstens einen Einlassventils des Gasmotors in einem Kurbelbereich von etwa 50° Kurbelwinkel vor UT (unterer Totpunkt) bis etwa 10° Kurbelwinkel nach UT liegt.

Auf diese Weise kann der Otto-Gasmotor mit einem besonders hohen Wirkungsgrad betrieben werden, da einerseits die Einlasskanäle im Zylinderkopf auf eine optimierte Strömung mit relativ geringem Drall und geringem Druckverlust ausgelegt sind. Dadurch wird die Ladungswechselarbeit verringert, was zu einer Erhöhung des Gasmotor-Wirkungsgrads führt.

Zudem basiert das Otto-Brennverfahren stark auf der vorhandenen Turbulenz im Brennraum. Durch die erfindungsgemäße Ausgestaltung des wenigstens einen Kolbens des Gasmotors als Quetschkolben wird durch die Quetschwirkung des Kolbens trotz relativ geringem Drall eine hohe Turbulenz im Brennraum erreicht. Während der Aufwärtsbewegung des Kolbens in Richtung oberer Totpunkt wird die Zylinderladung durch das zwischen Zylinderkopf und Kolbenboden immer kleiner werdende Volumen effektiv in eine Kolbenmulde des Kolbens geführt. Dabei wird die Menge an unverbrannten Kohlenwasserstoffen verringert und eine optimale Ladungsbewegung im Bereich der Zündkerze erreicht. Diese optimale Ladungsbewegung weist zum Zündzeitpunkt eine hohe Turbulenz an der Zündkerze auf, wodurch eine schnelle Ausbreitung der Flammenfront bei der Verbrennung realisiert wird. Dadurch wird die Klopffestigkeit bei der Kraftstoff-Verbrennung erhöht, wodurch das Verdichtungsverhältnis und somit auch der Wirkungsgrad des Gasmotors erhöht werden können.

Bei dem Betrieb des Otto-Gasmotors nach dem Miller-Kreisprozess wird der Einlassventil-Schließzeitpunkt des Motors nach früh verschoben, insbesondere vor den unteren Totpunkt des Gasmotors, so dass die Zylinderladung zuerst expandiert und sich die Temperatur im Brennraum verringert. Durch diese Temperaturabsenkung im Brennraum sinken der Verdichtungsenddruck, die Verdichtungsendtemperatur und die Zylinderspitzentemperatur, wodurch Klopffestigkeit des Gasmotors weiter ansteigt. Auf diese Weise kann das Verdichtungsverhältnis und somit auch der Wirkungsgrad des Gasmotors noch weiter erhöht werden können. Aufgrund der niedrigen Spitzentemperatur im Verbrennungsprozess werden dabei auch die NOx-Emissionen des Gasmotors deutlich verringert. Zudem wird durch die Auslegung der Einlasskanäle auf eine optimierte Strömung mit geringem Drall und geringem Druckverlust auch die Füllung des Gasmotors erhöht, was sich positiv auf den Miller-Kreisprozess auswirkt. Die durch das frühe Schließen der Einlassventile verringerte Ladungsbewegung im Brennraum wird wiederum durch die Quetschwirkung des Quetschkolbens kompensiert.

Bezüglich der reduzierten Drallzahl nach "Thien" wird auf die Abhandlung "Entwicklungsarbeiten an Ventilkanälen von Viertakt-Dieselmotoren", G. Thien, Graz, insbesondere Abschnitte B. "Kennzeichnung der Strömungseigenschaften von Ventilkanälen" und C. "Messung der Strömungseigenschaften von Ventilkanälen", veröffentlicht in der österreichischen IngenieurZeitschrift, 8. Jahrgang, Heft 9 (1965, Seiten 291 bis 302) verwiesen, deren Inhalt vollumfänglich zum Gegenstand der vorliegenden Anmeldung gemacht wird.

Die reduzierte Drallzahl $\left(\dfrac{n_D}{n}\right)_{m,red}$ stellt hier dabei die

mittlere Drallzahl $\left(\dfrac{n_D}{n}\right)_m$ nach "Thien" dividiert durch das Hub-Bohrungs-Verhältnis s/D dar. Auf diese Weise wird der Einfluss des Hubes eliminiert, so dass Kanäle verschiedener Motoren verglichen werden können. Die

mittlere Drallzahl $\left(\dfrac{n_D}{n}\right)_m$ stellt den über den gesamten Ventilhub integrierten Wert für die Drallzahl $n_D/n$ dar (gewichtet mit der Kolbengeschwindigkeit zum jeweiligen Zeitpunkt). Die Dralldrehzahl $n_D$ stellt die im stationären Versuch ermittelte Flügeldrehzahl eines Drallmessgeräts, beispielsweise eines Flügelrad-Anemometers, dar. Die Drehzahl $n$ stellt eine fiktive Motordrehzahl dar, die sich durch Gleichsetzen der mittleren axialen Strömungsgeschwindigkeit im Zylinder mit der mittleren Kolbengeschwindigkeit ergibt.

In einer bevorzugten Ausgestaltung des erfindungsgemäßen Verfahrens liegt bei dem Miller-Kreisprozess der Schließzeitpunkt des wenigstens einen Einlassventils des Gasmotors in einem Kurbelwinkelbereich von 45° Kurbelwinkel vor UT bis 20° Kurbelwinkel vor UT. So kann die Brennkraftmaschine mit einem besonders hohen Wirkungsgrad und gleichzeitig auch mit einem besonders geringen Schadstoff-Ausstoß betrieben werden.

Vorzugsweise wird der Gasmotor während des Ansaugtaktes mit einer Zylinderladung betrieben, die eine reduzierte Drallzahl nach "Thien" größer als 0,3 aufweist, um den Gasmotor mit einem hohen Wirkungsgrad betreiben zu können.

Erfindungsgemäß wird der Gasmotor während des Ansaugtaktes mit einer Zylinderladung betrieben, die eine reduzierte Drallzahl nach "Thien" aufweist, die in einen Bereich von etwa 0,6 bis 1,7 liegt. Mit einer derartigen reduzierten Drallzahl kann der Gasmotor mit einem besonders hohen Wirkungsgrad betrieben werden.

In einer weiteren besonders bevorzugten Ausgestaltung ist die Quetschspalthöhe bei OT geringer als 2mm, um die Turbulenz der Zylinderladung im Bereich der Zündkerze und somit auch den Wirkungsgrad des Gasmotors weiter zu erhöhen. Grundsätzlich wird das Minimum für die Quetschspalthöhe durch die Fertigungstoleranzen des Motors beschränkt, dergestalt, dass eine Kollision der Kolben mit den Ventilen oder dem Zylinderkopf zuverlässig ausgeschlossen ist. Bei der erfindungsgemäßen Verfahrensführung ist es jedoch bevorzugt, wenn die Quetschspalthöhe bei OT toleranzbereinigt größer als 0,5mm ist, um die Ladungsbewegung im Bereich der Zündkerze optimal auszubilden.

Erfindungsgemäß erstreckt sich die Quetschfläche des Kolbens, an der bei OT der Quetschspalt ausgebildet ist, über einen definierten Anteil der Kolben-Querschnittsfläche, wobei dieser definierte Querschnitt-Quetschflächenanteil in einem Bereich von 55% bis 85% der Kolben-Querschnittsfläche, bevorzugt in einem Bereich von 60% bis 80% der Kolben-Querschnittsfläche, liegt. Auf diese Weise wird die Ladungsbewegung im Brennraum weiter optimiert, wodurch der Wirkungsgrad des Gasmotors weiter erhöht werden kann. Konkret kann die Quetschfläche des Kolbens dabei beispielsweise durch denjenigen Bereich der Kolben-Querschnittsfläche gebildet sein, bei dem eine Quetschspalthöhe bei OT geringer als eine definierte Quetschspalthöhe, bevorzugt geringer als 4mm, besonders bevorzugt geringer als 2mm, ist.

In einer bevorzugten konkreten Ausgestaltung weist der Kolben eine Omega-Kolbenmulde auf, um eine besonders effektive Ladungsbewegung im Brennraum zu erreichen. Alternativ kann der Kolben aber auch eine Topf-Kolbenmulde mit geraden oder bogenförmigen Kolbenmulden-Seitenwänden aufweisen. So wird ebenfalls eine effektive Bewegung der Zylinderladung im Brennraum realisiert.

Weiter bevorzugt liegt das Verdichtungsverhältnis des Gasmotors in einem Bereich von 13 bis 15, um den Gasmotor mit einem besonders hohen Wirkungsgrad betreiben zu können.

Vorzugsweise ist an den Kolben für jedes zu dem Kolben korrespondierende Einlassventil und/oder für jedes zu dem Kolben korrespondierende Auslassventil des Gasmotors zudem eine Ventiltasche ausgebildet.

Weiter bevorzugt weist der Otto-Gasmotor eine externen Gemischbildung auf. Bei einem derartigen Gasmotor ist die erfindungsgemäße Verfahrensführung besonders effektiv.

In einer weiteren bevorzugten Ausgestaltung wird der Otto-Gasmotors mit einem mageren Brenngas-Luft-Gasgemisch, insbesondere ohne Abgasrückführung, betrieben, um den Gasmotor mit einem hohen Wirkungsgrad und geringen Schadstoffemissionen betreiben zu können. Alternativ kann der Otto-Gasmotor aber auch mit einem stöchiometrischen Verbrennungsluftverhältnis, insbesondere mit Abgasrückführung, betrieben werden. Die erhöhte Ladungsbewegung führt dort ebenfalls zu einer schnelleren Verbrennung und einer besseren Durchmischung und somit zu einer Erhöhung des Wirkungsgrads.

Zur Lösung der bereits genannten Aufgabe wird ferner auch ein Otto-Gasmotor, insbesondere ein stationärer Otto-Gasmotor, beansprucht, wobei der wenigstens eine Kolben des als Hubkolben-Brennkraftmaschine ausgebildeten Gasmotors durch einen Quetschkolben gebildet ist, insbesondere dergestalt, dass eine Quetschspalthöhe bei OT (oberer Totpunkt) geringer als 4mm ist, wobei der Gasmotor während des Ansaugtaktes mit einer Zylinderladung betrieben werden kann, die eine reduzierte Drallzahl $(n_D/n)_{m,red}$ nach "Thien", die in einem Bereich von 0,6 bis etwa 1,7 liegt, aufweist, und wobei der Gasmotor nach einem Miller-Kreisprozess betrieben werden kann, insbesondere dergestalt, dass der Schließzeitpunkt des wenigstens einen Einlassventils des Gasmotors in einen Kurbelwinkelbereich von etwa 50° Kurbelwinkel vor UT (unterer Totpunkt) bis etwa 10° Kurbelwinkel nach UT, wobei der Kolben (5) eine Omega-Kolbenmulde aufweist, und sich die Quetschfläche (21) des Kolbens (5), an der bei OT der Quetschspalt ausgebildet ist, über einen definierten Anteil der Kolben-Querschnittsfläche erstreckt, wobei dieser definierte Quetschflächenanteil in einem Bereich von 55% bis 85% der Kolben-Querschnittsfläche liegt.

Die sich durch den erfindungsgemäßen Otto-Gasmotor ergebenden Vorteile sind identisch mit den bereits gewürdigten Vorteilen der erfindungsgemäßen Verfahrensführung, so dass diese an dieser Stelle nicht wiederholt werden.

Die vorstehend erläuterten und/oder in den Unteransprüchen wiedergegebenen vorteilhaften Aus- und/oder Weiterbildungen der Erfindung können — außer zum Beispiel in den Fällen eindeutiger Abhängigkeiten oder unvereinbarer Alternativen — einzeln oder aber auch in beliebiger Kombination miteinander zur Anwendung kommen, wie in den beigefügten Ansprüchen definiert.

Die Erfindung und ihre vorteilhaften Aus- und/oder Weiterbildungen sowie deren Vorteile werden nachfolgend anhand von Zeichnungen beispielhaft näher erläutert.

Es zeigen:

Fig. 1    eine schematische Darstellung, aus der der Aufbau eines erfindungsgemäßen Otto-Gasmotors hervorgeht;

Fig. 2    eine schematische Darstellung, anhand der erfindungsgemäße Verfahrensführung erläutert wird;

Fig. 3    in einer Darstellung von oben einen Kolben des Otto-Gasmotors;

Fig. 4    in einer Schnittdarstellung entlang der Schnittlinie A-A aus Fig. 3 einen Teil des Kolbens;

Fig. 5    in einer Darstellung gemäß Fig. 3 eine zweite Ausführungsform des Kolbens; und

Fig. 6    in einer Schnittdarstellung entlang der Schnittlinie B-B aus Fig. 5 einen Teil des Kolbens.

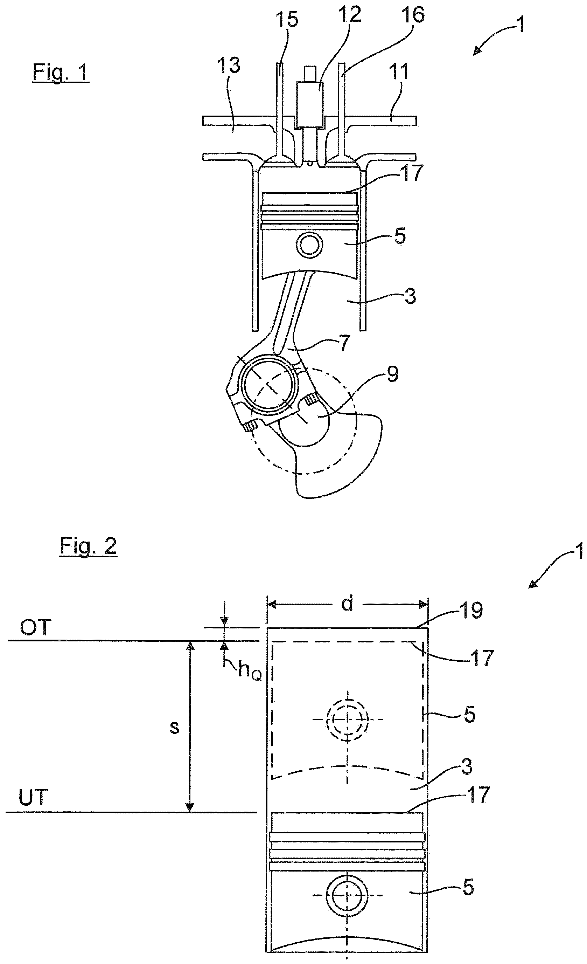

In Fig. 1 ist in einer schematischen Darstellung ein Teil eines erfindungsgemäßen stationären Otto-Gasmotors 1 gezeigt. Der Gasmotor 1 ist hier als 4-Takt Hubkolben-Brennkraftmaschine ausgebildet und weist mehrere Zylinder 3 auf, von denen in Fig. 1 nur einer ersichtlich ist. In jedem Zylinder 3 des Gasmotors 1 ist auf herkömmliche Weise ein Kolben 5 axial verlagerbar geführt, der über ein Pleuel 7 mit einer Kurbelwelle 9 des Gasmotors 1 verbunden ist. Zudem weist der Gasmotor 1 einen Zylinderkopf 11 auf, der Zündkerzen 12, Einlassventile 15 und Auslassventile 16 aufweist. Jedem Zylinder 3 sind hier dabei eine Zündkerze 12, zwei Einlassventile 15 und zwei Auslassventile 16 zugeordnet.

Der Zylinderkopf 11 ist hier als Niedrigdrall-Zylinderkopf ausgebildet ist. Dabei sind die Einlassventile 15 und korrespondierende Einlasskanäle 13 des Zylinderkopfs 11 hier beispielhaft derart ausgebildet, dass der Gasmotor 1 während des Ansaugtaktes mit einer Zylinderladung betrieben wird, die eine reduzierte Drallzahl nach "Thien" aufweist, die in einem Bereich von etwa 0,6 bis etwa 1,7 liegt. Diese reduzierte Drallzahl wird bei einer herkömmlichen Betriebsweise des stationären Otto-Gasmotors 1, beispielsweise in einem definierten Drehzahlbereich des Gasmotors 1, erreicht.

Zudem wird der stationäre Otto-Gasmotor 1 hier nach einem Miller-Kreisprozess betrieben, bei dem der Schließzeitpunkt der Einlassventile 15 des Gasmotors 1 in einen Kurbelwinkelbereich von 45° Kurbelwinkel vor UT bis 20° Kurbelwinkel vor UT liegt.

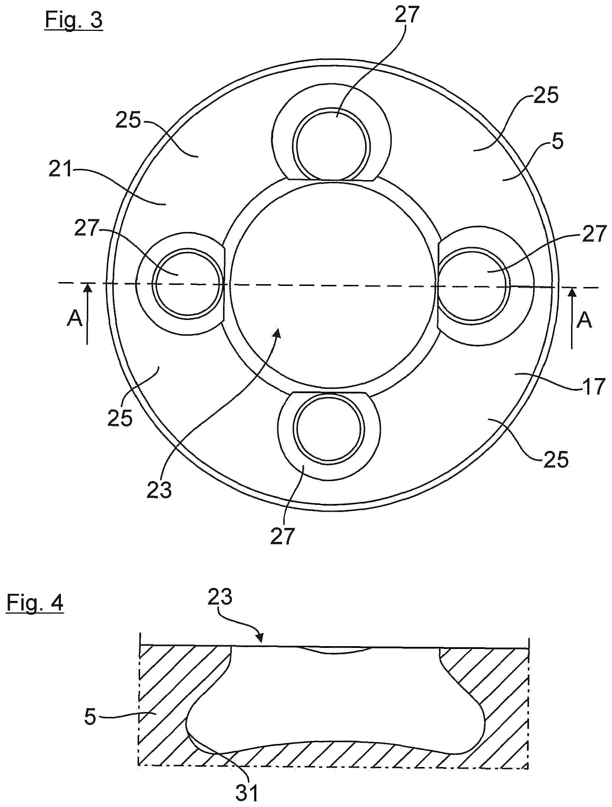

Des Weiteren sind die Kolben 5 des Gasmotors 1 hier als Quetschkolben ausgebildet, dergestalt, dass bei dem im Fig. 2 schematisch gezeigten oberen Totpunkt OT des jeweiligen Kolbens 5 eine Quetschspalthöhe $h_Q$ zwischen einem Kolbenboden 17 und einem Brennraumdach 19 unter Berücksichtigung von Fertigungstoleranzen geringer als 4mm ist. Eine Quetschfläche 21 (Fig. 3) des jeweiligen Kolbens 5, an der bei OT der Quetschspalt mit der Quetschspalthöhe $h_Q$ geringer als 4mm ausgebildet ist, erstreckt sich hier bei dem jeweiligen Kolben 5 über einen Bereich von 75% bis 80% der Kolben-Querschnittsfläche.

Gemäß Fig. 3 umfasst die Quetschfläche 21 hier sowohl radial außerhalb einer zentralen Kolbenmulde 23 befindliche ebenflächige Wandbereiche 25 des Kolbenbodens 17 als auch Ventiltaschen 27 bildende Einbuchtungen des Kolbenbodens 17. Dabei weist jeder Kolben 5 hier beispielhaft vier Ventiltaschen 27 auf, von denen zwei Ventiltaschen 27 den jeweiligen Einlassventilen 15 und zwei Ventiltaschen 27b zu den jeweiligen Auslassventilen 16 zugeordnet sind.

Gemäß Fig. 4 weist der jeweilige Kolben 5 hier zudem eine Omega-Kolbenmulde 23 auf, bei der, im in Fig. 4 gezeigten Querschnitt in Kolben-Axialrichtung gesehen, eine Querschnittskontur einer die Kolbenmulde 23 begrenzenden Muldenwand 31 des Kolbens 5 im Wesentlichen ω-förmig ausgebildet ist.

Des Weiteren liegt das Verdichtungsverhältnis (ε) des Gasmotors 1 hier in einem relativ hohen Bereich von 13 bis 15. Dadurch kann der Gasmotor 1 mit einem hohen Wirkungsgrad betrieben werden.

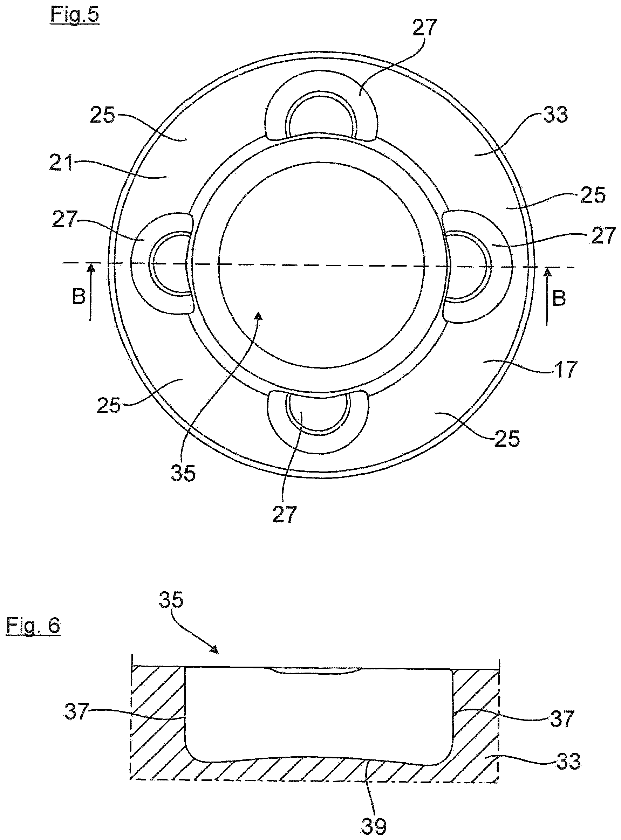

In den Fig. 5 und 6 ist ein Kolben 33 einer zweiten Ausführungsform eines erfindungsgemäßen Gasmotors 1 gezeigt. Im Vergleich zu dem in den Fig. 3 und 4 gezeigten Kolben 5 weist der Kolben 33 eine deutlich kleinere Quetschfläche 21 auf. Die Quetschfläche 21 des Kolben 33 liegt hier in einem Bereich von 60 % bis 65% der Kolben-Querschnittsfläche. Zudem weist der Kolben 33 hier gemäß Fig. 6 keine Omega-Kolbenmulde 23, sondern eine Topf-Kolbenmulde 35 mit geraden Kolbenmulden-Seitenwänden 37 auf. Dabei ist hier eine Kolbenmulden-Bodenwand 39 des Kolbens 33 mit einer relativ geringen Krümmung bogenförmig bzw. konkav gekrümmt.

## Bezugszeichenliste

| | |
|---|---|
| 1 | Otto-Gasmotor |
| 3 | Zylinder |
| 5 | Kolben |
| 7 | Pleuel |
| 9 | Kurbelwelle |
| 11 | Zylinderkopf |
| 12 | Zündkerze |
| 13 | Einlasskanal |
| 15 | Einlassventil |
| 16 | Auslassventil |
| 17 | Kolbenboden |
| 19 | Brennraumdach |
| 21 | Quetschfläche |
| 23 | Kolbenmulde |
| 25 | ebenflächiger Wandbereich |
| 27 | Ventiltasche |
| 31 | Wandbereich |
| 33 | Kolben |
| 35 | Kolbenmulde |
| 37 | Kolbenmulden-Seitenwand |
| 39 | Kolbenmulden-Bodenwand |
| d | Bohrung bzw. Durchmesser |
| $h_Q$ | Quetschspalthöhe |
| OT | oberer Totpunkt |
| S | Hub |
| UT | unterer Totpunkt |

## Patentansprüche

1. Verfahren zum Betreiben eines, insbesondere stationären, Otto-Gasmotors, wobei der wenigstens eine Kolben (5) des als Hubkolben-Brennkraftmaschine ausgebildeten Gasmotors (1) durch einen Quetschkolben gebildet ist, insbesondere dergestalt, dass eine Quetschspalthöhe ($h_Q$) bei OT (oberer Totpunkt) geringer als 4mm ist,

   wobei der Gasmotor (1) während des Ansaugtaktes mit einer Zylinderladung betrieben wird, die eine reduzierte Drallzahl $\left(\dfrac{n_D}{n}\right)_{m,red}$ nach "Thien", die in einem Bereich von etwa 0,6 bis etwa 1,7 liegt, aufweist,

   wobei der Gasmotor (1) nach einem Miller-Kreisprozess betrieben wird, insbesondere dergestalt, dass der Schließzeitpunkt des wenigstens einen Einlassventils (15) des Gasmotors (1) in einem Kurbelwinkelbereich von etwa 50° Kurbelwinkel vor UT (unterer Totpunkt) bis etwa 10° Kurbelwinkel nach UT liegt,

wobei der Kolben (5) eine Omega-Kolbenmulde aufweist, und

sich die Quetschfläche (21) des Kolbens (5), an der bei OT der Quetschspalt ausgebildet ist, über einen definierten Anteil der Kolben-Querschnittsfläche erstreckt, wobei dieser definierte Quetschflächenanteil in einem Bereich von 55% bis 85% der Kolben-Querschnittsfläche liegt.

2. Verfahren nach Anspruch 1, **dadurch gekennzeichnet, dass** bei dem Miller-Kreisprozess der Schließzeitpunkt des wenigstens einen Einlassventils (15) des Gasmotors (1) in einem Kurbelwinkelbereich von 45° Kurbelwinkel vor UT bis 20° Kurbelwinkel vor UT liegt.

3. Verfahren nach einem der vorhergehenden Ansprüche, **dadurch gekennzeichnet, dass** die Quetschspalthöhe ($h_Q$) bei OT geringer als 2mm ist, und/oder dass die Quetschspalthöhe ($h_Q$) bei OT größer als 0,5mm ist.

4. Verfahren nach einem der vorhergehenden Ansprüche, **dadurch gekennzeichnet, dass** der definierte Quetschflächenanteil in einem Bereich von 60% bis 80% der Kolben-Querschnittsfläche liegt.

5. Verfahren nach einem der vorhergehenden Ansprüche, **dadurch gekennzeichnet, dass** das Verdichtungsverhältnis des Gasmotors (1) in einem Bereich von 13 bis 15 liegt.

6. Verfahren nach einem der vorhergehenden Ansprüche, **dadurch gekennzeichnet, dass** an dem Kolben (5) für jedes zu dem Kolben (5) korrespondierende Einlassventil (15) und/oder für jedes zu dem Kolben (5) korrespondierende Auslassventil (16) des Gasmotors (1) eine Ventiltasche (27) ausgebildet ist.

7. Otto-Gasmotor, insbesondere stationärer Otto-Gasmotor und/oder zur Durchführung eines Verfahrens nach einem der vorhergehenden Ansprüche, wobei der wenigstens eine Kolben (5) des als Hubkolben-Brennkraftmaschine ausgebildeten Gasmotors (1) durch einen Quetschkolben ($h_Q$) gebildet ist, insbesondere dergestalt, dass eine Quetschspalthöhe bei OT (oberer Totpunkt) geringer als 4mm ist,

wobei der Gasmotor (1) während des Ansaugtaktes mit einer Zylinderladung betreibbar ist, die eine reduzierte Drallzahl $\left(\dfrac{n_D}{n}\right)_{m,red}$ nach "Thien", die in einem Bereich von etwa 0,6 bis etwa 1,7 liegt, aufweist,

wobei der Gasmotor nach einem Miller-Kreisprozess betreibbar ist, insbesondere dergestalt, dass der Schließzeitpunkt des wenigstens einen Einlassventils (15) des Gasmotors (1) in einem Kurbelwinkelbereich von etwa 50° Kurbelwinkel vor UT (unterer Totpunkt) bis etwa 10° Kurbelwinkel nach UT liegt;

wobei der Kolben (5) eine Omega-Kolbenmulde aufweist, und

sich die Quetschfläche (21) des Kolbens (5), an der bei OT der Quetschspalt ausgebildet ist, über einen definierten Anteil der Kolben-Querschnittsfläche erstreckt, wobei dieser definierte Quetschflächenanteil in einem Bereich von 55% bis 85% der Kolben-Querschnittsfläche liegt.

**Claims**

1. A method for operating an in particular stationary Otto gas engine, wherein the at least one piston (5) of the gas engine (1) configured as a reciprocating piston internal-combustion engine is formed by a compression piston, in particular in such a manner that a compression gap height ($h_Q$) at the TDC (top dead centre) is less than 4 mm;

wherein the gas engine (1) during the intake stroke is operated at a cylinder load which, according to "Thien", has a reduced swirl rate $\left(\dfrac{n_D}{n}\right)_{m,red}$ that is in a range from approximately 0.6 to approximately 1.7; wherein the gas engine (1) is operated according to a Miller cycle, in particular in such a manner that the closing time of the at least one intake valve (15) of the gas engine (1) is in a crank angle range of approximately 50° of the crank angle before the BDC (bottom dead centre) to approximately 10° of the crank angle after the BDC; wherein the piston (5) has an omega piston cavity, and the compression face (21) of the piston (5) on which the compression gap at the TDC is configured extends across a defined proportion of the piston cross-sectional area, wherein this defined compression face proportion is in a range from 55% to 85% of the piston cross-sectional area.

2. The method according to Claim 1, **characterized in that** in the Miller cycle the closing time of the at least one intake valve (15) of the gas engine (1) is in a crank angle range of 45° of the crank angle before the BDC to 20° of the crank angle before the BDC.

3. The method according to one of the preceding claims, **characterized in that** the compression gap height ($h_Q$) at the TDC is less than 2 mm, and/or **in that** the compression gap height ($h_Q$) at the TDC is more than 0.5 mm.

4. The method according to one of the preceding claims, **characterized in that** the defined compression face proportion is in a range from 60% to 80% of the piston cross-sectional area.

5. The method according to one of the preceding claims, **characterized in that** the compression ratio of the gas engine (1) is in a range from 13 to 15.

6. The method according to one of the preceding claims, **characterized in that** on the piston (5) one valve pocket (27) is configured for each intake valve (15) that communicates with the piston (5), and/or one valve pocket (27) is configured for each exhaust valve (16) of the gas engine (1) that communicates with the piston (5).

7. An Otto gas engine, in particular a stationary Otto gas engine and/or for carrying out a method according to one of the preceding claims, wherein the at least one piston (5) of the gas engine (1) configured as a reciprocating piston internal-combustion engine is formed by a compression piston ($h_Q$), in particular in such a manner that a compression gap height at the TDC (top dead centre) is less than 4 mm;

   wherein the gas engine (1) during the intake stroke is able to be operated at a cylinder load which, according to "Thien", has a reduced swirl rate $\left(\dfrac{n_D}{n}\right)_{m,red}$ that is in a range from approximately 0.6 to approximately 1.7;
   wherein the gas engine is able to be operated according to a Miller cycle, in particular in such a manner that the closing time of the at least one intake valve (15) of the gas engine (1) is in a crank angle range of approximately 50° of the crank angle before the BDC (bottom dead centre) to approximately 10° of the crank angle after the BDC; wherein the piston (5) has an omega piston cavity, and
   the compression face (21) of the piston (5) on which the compression gap at the TDC is configured extends across a defined proportion of the piston cross-sectional area, wherein this defined compression face proportion is in a range from 55% to 85% of the piston cross-sectional area.

**Revendications**

1. Procédé permettant de faire fonctionner un moteur à gaz à allumage commandé, en particulier stationnaire, dans lequel ledit au moins un piston (5) du moteur à gaz (1) réalisé sous la forme d'un moteur alternatif à combustion interne est formé par un piston d'écrasement, en particulier de telle sorte qu'une hauteur de fente d'écrasement ($h_Q$) au PMH (point mort haut) est inférieure à 4 mm,

   le moteur à gaz (1) fonctionnant pendant le temps d'admission avec un remplissage de cylindre qui présente un indice de turbulence réduit $\left(\dfrac{n_D}{n}\right)_{m,red}$ selon « Thien » qui est compris dans une plage d'environ 0,6 à environ 1,7,
   le moteur à gaz (1) fonctionnant selon un cycle de Miller, en particulier de telle sorte que le calage de fermeture de ladite au moins une soupape d'admission (15) du moteur à gaz (1) est compris dans une plage d'angle de vilebrequin d'environ 50° d'angle de vilebrequin avant le PMB (point mort inférieur) jusqu'à environ 10° d'angle de vilebrequin après le PMB,
   le piston (5) présentant une cavité de piston en forme d'oméga, et
   la surface d'écrasement (21) du piston (5) au niveau de laquelle la fente d'écrasement est réalisée au PMH s'étendant sur une fraction définie de la superficie de la section de piston, cette fraction de surface d'écrasement définie étant comprise dans une plage de 55 % à 85 % de la superficie de la section de piston.

2. Procédé selon la revendication 1, **caractérisé en ce que** lors du cycle de Miller, le calage de fermeture de ladite au moins une soupape d'admission (15) du moteur à gaz (1) est compris dans une plage d'angle de vilebrequin de 45° d'angle de vilebrequin avant le PMB à 20° d'angle de vilebrequin avant le PMB.

3. Procédé selon l'une quelconque des revendications précédentes, **caractérisé en ce que** la hauteur de fente d'écrasement ($h_Q$) au PMH est inférieure à 2 mm, et/ou **en ce que** la hauteur de fente d'écrasement ($h_Q$) au PMH est supérieure à 0,5 mm.

4. Procédé selon l'une quelconque des revendications précédentes, **caractérisé en ce que** la fraction de surface d'écrasement définie est comprise dans une plage de 60 % à 80 % de la superficie de la section de piston.

5. Procédé selon l'une quelconque des revendications précédentes, **caractérisé en ce que** le rapport de compression du moteur à gaz (1) est compris dans une plage de 13 à 15.

6. Procédé selon l'une quelconque des revendications précédentes, **caractérisé en ce qu'**une détente de soupape (27) est réalisée sur le piston (5) pour chaque soupape d'admission (15) correspondant au piston (5) et/ou pour chaque soupape d'échappement (16) correspondant au piston (5) du moteur à gaz (1).

7. Moteur à gaz à allumage commandé, en particulier moteur à gaz à allumage commandé stationnaire et/ou pour l'exécution d'un procédé selon l'une quelconque des revendications précédentes, dans lequel ledit au moins un piston (5) du moteur à gaz (1) réalisé sous la forme d'un moteur alternatif à combustion interne est formé par un piston d'écrasement ($h_Q$), en particulier de telle sorte qu'une hauteur de fente d'écrasement au PMH (point mort haut) est inférieure à 4 mm,

le moteur à gaz (1) pouvant fonctionner pendant le temps d'admission avec un remplissage de cylindre qui présente un indice de turbulence réduit $\left(\dfrac{n_D}{n}\right)_{m,red}$ selon « Thien » qui est compris dans une plage d'environ 0,6 à environ 1,7, le moteur à gaz pouvant fonctionner selon un cycle de Miller, en particulier de telle sorte que le calage de fermeture de ladite au moins une soupape d'admission (15) du moteur à gaz (1) est compris dans une plage d'angle de vilebrequin d'environ 50° d'angle de vilebrequin avant le PMB (point mort inférieur) jusqu'à environ 10° d'angle de vilebrequin après le PMB ;
le piston (5) présentant une cavité de piston en forme d'oméga, et
la surface d'écrasement (21) du piston (5) au niveau de laquelle la fente d'écrasement est réalisée au PMH s'étendant sur une fraction définie de la superficie de la section de piston, cette fraction de surface d'écrasement définie étant comprise dans une plage de 55 % à 85 % de la superficie de la section de piston.

Fig. 1

Fig. 2

Fig. 3

Fig. 4

Fig.5

Fig. 6

**IN DER BESCHREIBUNG AUFGEFÜHRTE DOKUMENTE**

**In der Beschreibung aufgeführte Patentdokumente**

- JP 2003278569 A
- JP H1193776 A
- DE 102006029754 A1
- EP 2698508 A1
- DE 102011110072 A1

**In der Beschreibung aufgeführte Nicht-Patentliteratur**

- **G. THIEN, GRAZ.** *Entwicklungsarbeiten an Ventil-kanälen von Viertakt-Dieselmotoren*
- B. ''Kennzeichnung der Strömungseigenschaften von Ventilkanälen'' und C. ''Messung der Strömungseigenschaften von Ventilkanälen. österreichischen IngenieurZeitschrift, 1965, 291-302